# EUROPÄISCHE PATENTSCHRIFT

(11) **EP 0 551 582 B1**
(45) Veröffentlichungstag und Bekanntmachung des Hinweises auf die Patenterteilung: **11.10.1995**
(21) Anmeldenummer: 92119420.5
(22) Anmeldetag: 13.11.1992
(51) Int. Cl.: F16L 17/04

(54) **Rohrkupplung**
Pipe coupling
Raccord pour tuyaux

(30) Priorität: 16.01.1992 CH 115/92
(43) Veröffentlichungstag der Anmeldung: 21.07.1993
(73) Patentinhaber: STRAUB FEDERNFABRIK AG, CH-7323 Wangs (CH)
(72) Erfinder: Straub, Immanuel, CH-7323 Wangs (CH)
(74) Vertreter: Patentanwälte Schaad, Balass, Menzl & Partner AG

(56) Entgegenhaltungen:
- EP-A- 0 205 896
- EP-A- 0 211 158
- US-A- 3 116 078
- US-A- 4 119 333

## Beschreibung

Die vorliegende Erfindung betrifft eine Rohrkupplung gemäss dem Oberbegriff des Anspruchs 1.

Eine Rohrkupplung dieser Art ist aus der DE-A-27 31 465 bzw. der entsprechenden US-A-4,119,333 bekannt. Eine im Querschnitt C-förmige Elastomer-Dichtungsmanschette ist von einem verengbaren Gehäuse mit radialen Endwänden umgriffen. Die axialen Randbereiche der Manschette sind, im Querschnitt gesehen, keilförmig ausgebildet, so dass die Stirnseiten eine konische, zur Längsmitte des Gehäuses hin konvergierende radial innere Fläche und eine entgegengesetzt konische radial äussere Fläche aufweisen. Der Manschettensteg ist von einem endlichen Einlageblech umschlossen, das den Gehäusespalt überbrückt und das radial nach innen abgewinkelte Ränder aufweist, um die Manschette im Bereich der radial äusseren Fläche stirnseitig abzustützen. Kegelstumpfförmige und zur Längsmitte des Gehäuses hin konvergierende Spannringe, die mit ihrem äusseren Rand in der Kehle zwischen dem Gehäusemantel und den Endwänden abgestützt sind, stützen mit ihrem inneren, lamellierten Randbereich die Manschette an ihren radial inneren Flächen der Stirnseiten ab. Um die Spannringe im Gehäuse zu halten und die abgewinkelten Ränder der Stahlbandeinlage am Aufspreizen unter dem Druck der Manschette bei zusammengezogenem Gehäuse zu hindern, ist jeweils der Raum zwischen dem Rand der Stahlbandeinlage, dem Gehäusemantel und dem betreffenden Spannring mit einem im Querschnitt dreieckigen massiven Sprengring ausgefüllt. Ein weiterer, im Querschnitt kreisförmiger Sprengring greift jeweils zwischen den Spannring und die betreffende Endwand des Gehäuses. Diese Rohrkupplung weist selbst bei rauher oder unregelmässiger Rohroberfläche ein hervorragendes Dichtvermögen auf.

Es ist eine Aufgabe der vorliegenden Erfindung, die gattungsgemässe Rohrkupplung bei schonender Abstützung der Manschette zu vereinfachen.

Diese Aufgabe wird durch eine Rohrkupplung gelöst, die die Merkmale im Anspruch 1 aufweist.

Der im Querschnitt V-förmige und deshalb äusserst stabile Stützring macht nicht nur die bei der gattungsgemässen Rohrkupplung notwendigen Sprengringe überflüssig, sondern überdeckt auch im inneren Randbereich der Spannringe vorhandene Schlitze oder durch die Lamellierung erzeugte Kanten. Dies ermöglicht jede beliebige Ausbildung des inneren Randes und des inneren Randbereichs der Spannringe, um mit den Rohren bei Zusammenziehen des Gehäuses optimal in Eingriff zu gelangen, ohne dass auf eine eventuelle Verletzung der Manschette Rücksicht genommen werden muss. Das Einlageblech muss keine stirnseitige Stützfunktion aufnehmen, und kann somit einfacher geformt sein.

Eine besonders bevorzugte Ausbildungsform der erfindungsgemässen Rohrkupplung gemäss Anspruch 2 verhindert bei Wärmedehnung oder Druckdehnung das Fliessen des Manschettenmaterials, was die Erhöhung der zulässigen Betriebstemperatur und auch grössere Temperaturänderungen ermöglicht.

Weitere bevorzugte Ausbildungsformen des Erfindungsgegenstandes sind in den verbleibenden abhängigen Ansprüchen angegeben.

Die vorliegende Erfindung wird nun anhand eines in der Zeichnung dargestellten Ausführungsbeispiels näher erläutert. Es zeigen rein schematisch:
- Fig. 1 und 2: in Ansicht bzw. Seitenansicht und teilweise geschnitten die erfindungsgemässe Rohrkupplung;
- Fig. 3: in einem Längsschnitt und vergrössert einen Teil der erfindungsgemässen Rohrkupplung, nach der Montage an zu kuppelnde Rohre; und
- Fig. 4: perspektivisch einen erfindungsgemässen Stützring.

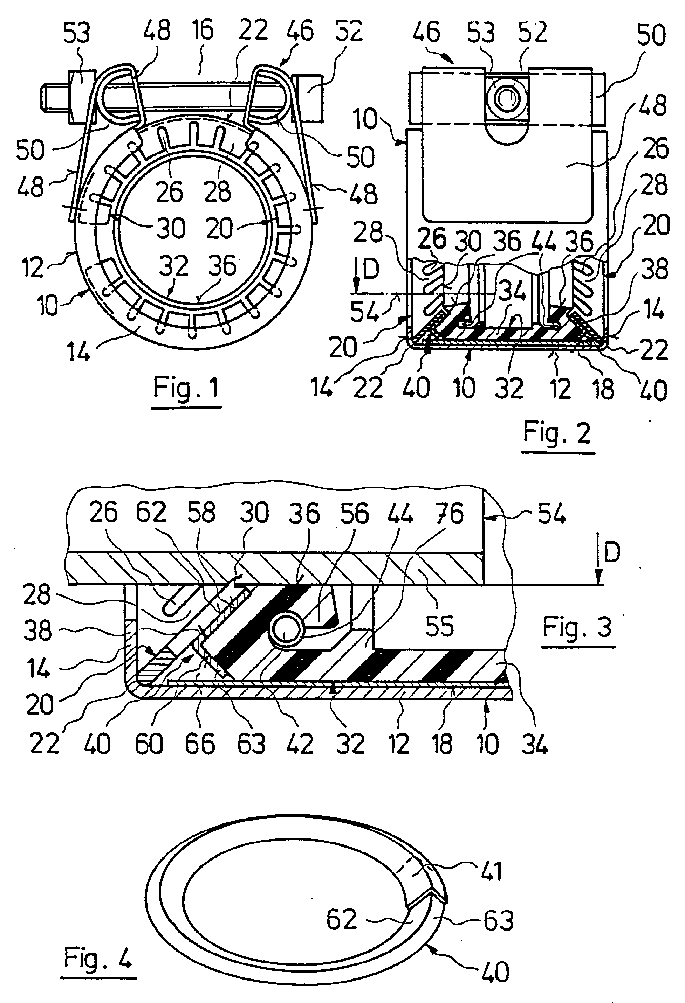

Das in den Fig. 1 und 2 dargestellte, der Länge nach gespaltene Gehäuse 10 besitzt einen zylindrischen Gehäusemantel 12 und einwärts gebogene radiale Endwände 14. Ein den Gehäusespalt 16 überbrückendes flaches Einlageblech 18 liegt an der Innenseite des Gehäusemantels 12 an. Das endliche Einlageblech 18 ist bezüglich dem Gehäusespalt 16 selbstverständlich derart ausgerichtet, dass sein Längsspalt nicht im Bereich des Gehäusespaltes 16, sondern vorzugsweise diesem diametral gegenüberliegt.

Weiter weist die Rohrkupplung zwei kegelstumpfförmige und zu der Längsmitte des Gehäuses 10 hin konvergierend ausgebildete Spannringe 20 auf, die mit ihrem äusseren Rand 22 im Gehäuse 10 in der Kehle zwischen dem Gehäusemantel 12 und der jeweiligen Endwand 14 gehalten sind. Im inneren Randbereich weisen die Spannringe 20 eine Vielzahl durch schlitzartige Ausnehmungen 26 entstandene Lamellen 28 auf. Die freie Endkante 30 jeder dieser Lamellen 28 bildet somit Krallen, die dazu bestimmt sind, sich in die Mantelfläche der miteinander zu verbindenden Rohrenden einzugraben und sich daselbst festzukrallen.

Im vom Gehäuse 10, dem Einlageblech 18 und den Spannringen 20 begrenzten Raum ist eine endlose, im Querschnitt C-förmige Elastomer-Dichtungsmanschette 32 angeordnet, die mit ihrem Manschettensteg 34 am Einlageblech 18 bzw. Gehäusemantel 12 anliegt und deren Dichtlippen 36 sich gegeneinander erstrecken. Die Stirnseiten 38 der Manschette 32 sind je von einem im Querschnitt V-förmigen Stützring 40 umgriffen, dessen Aufbau und Funktionsweise weiter unten zu beschreiben ist.

Weiter ist in der vom Manschettensteg 32 und der betreffenden Dichtlippe 36 begrenzten Ringnut 42 ein durch eine geschlossene Zugfeder gebildeter Federring 44 vorhanden, um die Dichtlippe 36 am Manschettensteg 34 abzustützen und radial nach innen gegen die zu kuppelnden Rohre zu ziehen.

Das Gehäuse 10 weist einen Verschluss 46 auf, bestehend aus am Gehäuse 10 angeschweissten Spannlaschen 48, von diesen umschlossenen, im Querschnitt U-förmigen Spannstäben 50 und einer Spannschraube 52 mit Mutter 53. Die lichte Weite der Rohrkupplung (Gehäuse 10, Manschette 32, Einlageblech 18, Spannringe 20, Stützringe 40, Federringe 44) ist in dem in den Fig. 1 und 2 dargestellten Zustand so reichlich bemessen, dass gegenüber dem in der Fig. 2 mit einem Pfeil D angedeuteten Aussendurchmesser der Rohre 54 in jedem Fall ein Uebermass vorhanden ist, so dass die Kupplung leicht über das eine Rohr 54 geschoben und nach Verlegen der Rohre 54 auch auf das andere Rohrende hinübergeschoben werden kann. Durch das Anziehen der Spannschraube 52 lässt sich der Innendurchmesser des Gehäuses 10 wie bei einer Rohrschelle verkleinern, wobei der Gehäusespalt 16 verringert wird und sich die Enden des Einlagebleches 18 im Gehäuse 10 einander nähern. Hierbei wird die Manschette 32 im Umfangssinne gestaucht, wobei die Federringe 44 und an den Dichtlippen 36 angeformte Ringwülste 56 die Dichtlippen 36 zur satten Auflage an die Rohrwandung 55 bringen, wie dies Fig. 3 erkennen lässt. Dabei verengen sich auch die endlichen Spannringe 20, die derart ausgebildet sind, dass sie bei vollständig zusammengezogenem Gehäuse 10 ungefähr eine Windung bilden. Beim Verengen des Gehäuses 10 verankern sich somit die freien Endkanten 30 der Lamellen 28 in der Rohrwandung 55 infolge der axialen als auch radialen Abstützung der Spannringe 20 am Gehäuse 10. Dadurch ist nicht nur die Rohrkupplung an den Rohren 54 fixiert, sondern auch die Rohre 54 werden am Herausrutschen aus der Rohrkupplung, beispielsweise infolge durch Druck erzeugte axiale Kräfte, gehindert. In der Fig. 3 ist jeweils nur der eine Endbereich der Rohrkupplung gezeigt, der andere, axial gegenüberliegende Endbereich ist selbstverständlich gegengleich ausgebildet und funktioniert identisch.

Die Stirnseiten 38 der Manschette 32 sind in zwei konische Flächen unterteilt, wobei die radial innere Fläche 58 zu der Längsmitte des Gehäuses 10 hin konvergierend ausgebildet und somit zum betreffenden Spannring 20 etwa parallel ist. Die radial äussere Fläche 60 ist entgegengesetzt konisch ausgebildet, so dass diese beiden Flächen 58,60 in etwa rechtwinklig zueinander verlaufen. Der V-förmige Stützring 40 liegt, wie insbesondere Fig. 3 zeigt, mit seiner radial inneren Flanke 62 im Bereich der inneren Fläche 58 an der Maschette 32 an und stützt mit seiner äusseren Flanke 63 diese im Bereich der äusseren Fläche 60. Der endliche und somit verengungsfähige Stützring 40 ist zu etwas mehr als einer Windung aufgebogen, so dass seine beidseitigen Endabschnitte 41 einander überlappen, wie dies Fig. 4 zeigt.

Die Stützringe 40 greifen somit mit ihren inneren Flanken 62 in den Bereich zwischen der radial inneren Fläche 58 der Stirnseiten 38 der Manschette 32 und den Spannringen 20 ein und überbrücken somit die Ausnehmungen 26 im inneren Randbereich der Spannringe 20. Eine Verletzung der Manschette 32 durch scharfe Kanten oder das Fliessen von Material in die Ausnehmungen 26 bzw. die Hohlräume 66, wenn infolge Druckdehnung und Wärmedehnung die Fliessgrenze des Materials der Dichtungsmanschette 32 erreicht wird, ist dadurch verhindert. In radialer Richtung sind die Flanken 62,63 etwas kürzer ausgebildet als die entsprechenden Flächen 58,60 der Manschette 32. Die Flanken 62,63 sind aber so ausgelegt, dass bei verengtem Gehäuse 10 der Stützring 40 innernends an der Rohrwandung 55 und äussernends am Einlageblech 18, das in axialer Richtung gesehen über den Stützring 40 vorsteht, anliegt, wie dies Fig. 3 zeigt, oder höchstens einen dünnen Spalt frei lässt. Beim Verspannen des Gehäuses 10 gleitet somit der Stützring 40 entlang dem Spannring 20 in Richtung gegen den vom Spannring 20 und Gehäusemantel 12 bzw. Einlageblech 18 begrenzten Hohlraum 66. Der aus einem hochfesten Stahl gefertigte Stützring 40 besitzt infolge seinem V-Querschnitt und seiner Ringform eine grosse Eigenstabilität. Das Anliegen der inneren Flanke 62 am Spannring 20 und Anstehen des Randes der äusseren Flanke 63 am Einlageblech 18 verhindert zusätzlich jede Möglichkeit des Aufspreizens des Stützrings 40 und das beidseitige Anliegen des Stützrings 40 verhindert jegliches Wegfliessen von Material der Manschette 33 bei höheren Betriebstemperaturen.

Wie dies insbesondere aus der Fig. 3 hervorgeht, ist der Ringwulst 56 im an das freie Ende angrenzenden Endbereich der Dichtlippe 36 auf der dem Manschettensteg 34 zugewandten Seite an der Dichtlippe 36 angeformt, so dass die Ringnut 42 eine Art Hinterschneidung für den Federring 44 aufweist.

Am Manschettensteg 34 sind den Ringnuten 42 vorgelagert und diese übergreifende Ringrippen 76 angeformt, die in drucklosem Zustand bzw. bei Unterdruck das Abheben des Manschettensteges 34 vom Einlageblech 18 verhindern und andererseits ein ungewolltes Herausrutschen des Federrings 44 aus der Ringnut 42 verunmöglichen.

Die Dichtlippe 36 wird vom Federring 44 unabhängig von der Alterung des Elastomermaterials der Manschette 32, immer sicher an der Rohrwandung 55 satt anliegend, gehalten. Dies auch bei einem evtuellen Unterdruck in den Rohren 54 und dem damit über den Rohrstoss kommunizierenden Innenraum der Rohrkupplung. Da durch den Stützring 40 das Wegfliessen von Material der Manschette 32 in die Ausnehmungen 26 der Spannringe 20 und andere Hohlräume 66 bei hohen Temperaturen verhindert ist, sind für die erfindungsgemässe Rohrkupplung höhere Betriebstemperaturen und auch grössere Temperatur-Aenderungen zulässig als bei bekannten Rohrkupplungen.

## Patentansprüche

1. Rohrkupplung mit einer im Querschnitt C-förmigen Elastomer-Dichtungsmanschnette (32), deren Dichtlippen (36) sich gegeneinander erstrecken und die von einem durch einen Verschluss (46) verengbaren Gehäuse (10) mit radialen Endwänden (14), von kegelstumpfförmigen und zu der Längsmitte des Gehäuses (10) hin konvergierend ausgebildeten, mit ihrem äusseren Rand (22) im Gehäuse (10) in der Kehle zwischen Gehäusemantel (12) und der betreffenden Endwand (14) axial gehaltenen Spannringen (20) und von einem zwischen Manschette (32) und Gehäuse (10) eingelegten, den längsverlaufenden Gehäusespalt (16) überbrückenden Einlageblech (18) umschlossen ist, jede Stirnseite (38) der Manschette (32) eine konische, zu der Längsmitte des Gehäuses (10) hin konvergierende und vom Spannring (20) abgestützte radial innere Fläche (58) und eine entgegengesetzt konische radial äussere Fläche (60) aufweist, und Mittel (40) vorhanden sind um diese äussere Fläche (60) abzustützen, wobei die Manschette (32) vor dem Zusammenziehen des Gehäuses (10) inbezug auf den Nenndurchmesser (D) der zu kuppelnden Rohre (54) Uebermass aufweist und beim Zusammenziehen des Gehäuses (10) im Umfangssinne stauchbar und die Dichtlippen (36) satt an die Rohrwandung (55) anpressbar sind, dadurch gekennzeichnet, dass die konischen Flächen (58, 60) von einem im Querschnitt V-förmigen, im Umfangssinn verengungsfähigen Stützring (40) umfasst sind, dessen eine radial innere Flanke (62) zwischen die radial innere Fläche (58) der Manschette (32) und den Spannring (20) eingreift und dessen radial äussere Flanke (63) die radial äussere Fläche (60) der Manschette (32) stützt.

2. Rohrkupplung nach Anspruch 1, dadurch gekennzeichnet, dass der Stützring (40) bei zusammengezogenem Gehäuse (10) den Raum zwischen der Rohrwandung (55) und dem Gehäuse (10) bzw. Einlageblech (18) im wesentlichen überbrückt und vorzugsweise daran anliegt.

3. Rohrkupplung nach Anspruch 1 oder 2, dadurch gekennzeichnet, dass das flache Einlageblech (18), in axialer Richtung gesehen über den Rand der äusseren Flanke (63) des Stützrings (40) vorsteht.

4. Rohrkupplung nach einem der Ansprüche 1 bis 3, dadurch gekennzeichnet, dass der endliche Stützring (40) einander überlappende Endabschnitte (41) aufweist.

5. Rohrkupplung nach einem der Ansprüche 1 bis 4, dadurch gekennzeichnet, dass der Stützring (40) aus hochfestem Stahl gefertigt ist.

6. Rohrkupplung nach einem der Ansprüche 1 bis 5, dadurch gekennzeichnet, dass die Spannringe (20) im innern Randbereich (24) durch Ausnehmungen (26) entstandene Lamellen (28) aufweisen, die von der inneren Flanke (62) des Stützrings (40) überdeckt sind.

7. Rohrkupplung nach einem der Ansprüche 1 bis 6, dadurch gekennzeichnet, dass die Spannringe (20) im Umfangssinn aufgetrennt sind und die Stützringe (40) den Spalt der Spannringe (20) überbrücken.

## Claims

1. Pipe coupling having an elastomer sealing sleeve (32) of C-shaped cross-section, the sealing lips (36) of which extend towards each other and which is enclosed by a housing (10), contractable by a closure (46), having radial end walls (14), by frustoconical clamping rings (20), which are configured to converge in the direction of the longitudinal centre of the housing (10) and are held axially by their outer border (22) in the housing (10) in the throat between the housing casing (12) and the end wall (14) in question, and by an insert plate (18), which is inserted between the sleeve (32) and the housing (10) and bridges the longitudinally running housing gap (16), each front face (38) of the sleeve (32) exhibiting a conical, radially inner surface (58), which converges in the direction of the longitudinal centre of the housing (10) and is supported by the clamping ring (20), and an inversely conical, radially outer surface (60), and means (40) being present to support this outer surface (60), the sleeve (32), prior to the compression of the housing (10), exhibiting an overmeasure in relation to the nominal diameter (D) of the pipes (54) to be coupled, and, upon the compression of the housing (10), being able to be upended in the peripheral direction and the sealing lips (36) being able to be contact-pressed snugly against the pipe wall (55), characterized in that the conical surfaces (58, 60) are surrounded by a supporting ring (40), which is of V-shaped cross-section and is contractable in the peripheral direction, one radially inner flank (62) of which engages between the radially inner surface (58) of the sleeve (32) and the clamping ring (20) and the radially outer flank (63) of which supports the radially outer surface (60) of the sleeve (32).

2. Pipe coupling according to Claim 1, characterized in that the supporting ring (40), when the housing (10) is compressed, essentially bridges the space between the pipe wall (55) and the housing (10) or the insertion plate (18) and preferably bears thereagainst.

3. Pipe coupling according to Claim 1 or 2, characterized in that the flat insert plate (18), viewed in the axial direction, projects over the border of the outer flank (63) of the supporting ring (40).

4. Pipe coupling according to one of Claims 1 to 3, characterized in that the open-ended supporting ring (40) exhibits mutually overlapping end sections (41).

5. Pipe coupling according to one of Claims 1 to 4, characterized in that the supporting ring (40) is made from high-strength steel.

6. Pipe coupling according to one of Claims 1 to 5, characterized in that the clamping rings (20) exhibit laminae (28) which are produced in the inner border area (24) by recesses (26) and which are covered by the inner flank (62) of the supporting ring (40).

7. Pipe coupling according to one of Claims 1 to 6, characterized in that the clamping rings (20) are divided up in the peripheral direction and the supporting rings (40) bridge the gap in the clamping rings (20).

## Revendications

1. Raccord de tuyaux avec une manchette en élastomère (32) de section transversale en C, dont les lèvres d'étanchéité (36) s'étendent en vis-à-vis, et qui est enveloppée par un corps (10) muni de parois extrêmes radiales (14), rétrécissable par une fermeture (46), par des cônes de serrage (20) tronconiques, convergents en direction du centre longitudinal du corps (10), et maintenus dans le sens axial, par leur bord externe (22), dans le corps (10), dans la gorge comprise entre l'enveloppe (12) du corps et la paroi extrême (14) concernée, et par une tôle de fourrure (18), insérée entre la manchette (32) et le corps (10), et pontant la fente longitudinale (16) du corps, chaque côté frontal (38) de la manchette (32) présentant une surface conique interne (58) dans le sens radial, convergente en direction du centre longitudinal du corps (10) et supportée par le cône de serrage (20), et une surface externe (60) dans le sens radial, de conicité opposée, des moyens (40) étant prévus pour supporter cette surface externe (60), la manchette (32) présentant, avant la contraction du corps (10), une surmesure par rapport au diamètre nominal (D) des tuyaux (54) à accoupler et pouvant être écrasée dans le sens périphérique lors de la contraction du corps (10), et les lèvres d'étanchéité (36) pouvant être pressées à plat sur la paroi (55) des tuyaux, caractérisé en ce que les surfaces coniques (58, 60) sont enveloppées par une bague d'appui (40) de section transversale en V, rétrécissable dans le sens périphérique, dont un flanc interne radial (62) s'engage entre la surface radiale interne (58) de la manchette (32) et le cône de serrage (20), et dont le flanc radial externe (63) supporte la surface radiale externe (60) de la manchette (32).

2. Raccord de tuyaux suivant la revendication 1, caractérisé en ce que la bague d'appui (40), à l'état de contraction du corps (10), ponte essentiellement l'espace compris entre la paroi (55) des tuyaux et le corps (10) et/ou la tôle de fourrure (18), sur lesquels elle s'applique de préférence.

3. Raccord de tuyaux suivant l'une des revendications 1 ou 2, caractérisé en ce que la tôle de fourrure plate (18) dépasse du bord du flanc externe (63) de la bague d'appui (40), vu dans le sens axial.

4. Raccord de tuyaux suivant l'une quelconque des revendications 1 à 3, caractérisé en ce que la bague d'appui extrême (40) présente des sections extrêmes (41), qui se chevauchent mutuellement.

5. Raccord de tuyaux suivant l'une quelconque des revendications 1 à 4, caractérisé en ce que la bague d'appui (40) est réalisée en acier hautement résistant.

6. Raccord de tuyaux suivant l'une quelconque des revendications 1 à 5, caractérisé en ce que les cônes de serrage (20) présentent, dans une zone de bordure interne (24), des lamelles (28) formées par des évidements (26) et couvertes par le flanc interne (62) de la bague d'appui (40).

7. Raccord de tuyaux suivant l'une quelconque des revendications 1 à 6, caractérisé en ce que les cônes de serrage (20) sont séparés dans le sens périphérique, les bagues d'appui (40) pontant la fente des cônes de serrage (20).
